# EUROPÄISCHE PATENTSCHRIFT

(11) **EP 3 084 498 B1**
(45) Veröffentlichungstag und Bekanntmachung des Hinweises auf die Patenterteilung: **21.09.2022**
(21) Anmeldenummer: 14816226.6
(22) Anmeldetag: 17.12.2014
(51) Int. Cl.: G02B 19/00

(54) **OPTISCHES ELEMENT FÜR MEHRERE LEDS, SOWIE ANORDNUNG ZUR LICHTABGABE**
OPTICAL ELEMENT FOR A PLURALITY OF LEDS, AND ARRANGEMENT FOR LIGHT EMISSION
ÉLÉMENT OPTIQUE DESTINÉ À UNE PLURALITÉ DE LED ET AGENCEMENT D'ÉMISSION DE LUMIÈRE

(30) Priorität: 20.12.2013 DE 102013226970
(43) Veröffentlichungstag der Anmeldung: 26.10.2016
(73) Patentinhaber: Zumtobel Lighting GmbH, 6850 Dornbirn (AT)
(72) Erfinder: EBNER, Stephan, A-6850 Dornbirn (AT)
(74) Vertreter: Thun, Clemens
(86) Internationale Anmeldenummer: PCT/EP2014/078166
(87) Internationale Veröffentlichungsnummer: WO 2015/091614

(56) Entgegenhaltungen:
- EP-A1- 1 681 509
- EP-A2- 2 469 159
- DE-A1-102008 036 845
- DE-A1-102011 015 405

## Beschreibung

Die Erfindung betrifft ein optisches Element zur Beeinflussung eines von mehreren LEDs (LED: Licht abgebende Diode) abgegebenen Lichts, sowie eine Anordnung zur Lichtabgabe mit einem solchen optischen Element und entsprechenden LEDs.

Aus dem Stand der Technik ist ein derartiges optisches Element bekannt, das eine Ausnehmung aufweist, über welche das Licht der LEDs eingestrahlt wird; auf der gegenüberliegenden Seite weist das optische Element einen Lichtaustrittsbereich auf. In der Praxis hat es sich hierbei als problematisch bzw. aufwändig herausgestellt, das optische Element und die entsprechenden LEDs so anzuordnen, dass eine gewünschte Abstrahlcharakteristik bei vorgegebener Genauigkeit zuverlässig erzielt wird.

Aus der EP 1 681 509 A1 ist eine LED-Lichtquelle mit einem optisch wirksamen Kunststoffteil bekannt. Das Kunststoffteil weist einen Lichteintrittsbereich und auf der gegenüberliegenden Seite einen Lichtaustrittsbereich auf. Letzterer ist durch eine ringförmige Einbuchtung in einen zentralen Mittelbereich und einen Randbereich untergliedert. Der Lichtaustrittsbereich weist normal betrachtet eine n-zählige Drehsymmetrie auf. Optische Elemente für LEDs sind aus den Schriften EP 2 469 159 A2 und DE 10 2011 015 405 A1 bekannt.

Aus der DE 10 2008 036 845 A1 ist ein optisches Element bekannt, welches sowohl in einem Lichteintrittsbereich als auch in einem Lichtaustrittsbereich Radialfacetten zur Beeinflussung der Lichtabstrahleigenschaften aufweisen kann. Das optische Element ist in einem Querschnitt senkrecht zur Lichtabstrahlachse kreisförmig. Der Lichtaustrittsbereich ist durch eine mittig angeordnete Sammellinse und seitlich hierzu angeordneten schrägen Austrittsflächen gebildet.

Der Erfindung liegt die Aufgabe zugrunde, ein verbessertes optisches Element und eine entsprechende verbesserte Anordnung anzugeben. Insbesondere soll dabei bei insgesamt kompakter Gestaltung eine zuverlässige, besonders gut kontrollierbare Abstrahlcharakteristik erzielbar sein.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist ein optisches Element zur Beeinflussung eines von mehreren LEDs abgegebenen Lichts vorgesehen, das einen Lichteintrittsbereich zum Eintritt des Lichts aufweist, sowie einen, dem Lichteintrittsbereich gegenüber liegenden Lichtaustrittsbereich zum Austritt des Lichts. Dabei ist durch die Form des optischen Elements eine, sowohl durch den Lichteintrittsbereich, als auch durch den Lichtaustrittsbereich verlaufende Achse festgelegt; der Lichtaustrittsbereich ist durch eine ringförmige Einbuchtung in einen zentralen Mittelbereich und einen, um den Mittelbereich herum angeordneten Randbereich untergliedert. Der Lichteintrittsbereich und der Lichtaustrittsbereich sind derart geformt, dass sie, in einer Richtung entlang der Achse betrachtet, eine *n*-zählige Drehsymmetrie aufweisen, wobei n eine natürliche Zahl größer als 2 ist.

Erfindungsgemäß ist die Einbuchtung mit Bezug auf die Achse durch einen Randbereich des Mittelbereichs und durch einen Schrägflächenbereich gebildet, wobei der Schrägflächenbereich sich nach außen hin bis zum Randbereich erstreckt, und wobei der Schrägflächenbereich keine Strukturelemente aufweist.

Durch diese Gestaltung lassen sich die LEDs so anordnen, dass jedem der n gebildeten Drehsymmetrie-Bereiche genau eine der LEDs zugeordnet ist. Durch diese Zuordnung lässt sich eine besonders gute Kontrollierbarkeit der Abstrahlcharakteristik der Anordnung erzielen.

Vorzugsweise weist dabei n einen Wert zwischen 3 und 10 auf, insbesondere zwischen 3 und 6. Hierdurch lässt sich mithilfe des optischen Elements eine besonders gleichförmige Lichtabgabe erzielen.

Vorzugsweise ist der Mittelbereich, in einem rechten Winkel zur Achse betrachtet, in erster Näherung kreisabschnittförmig. Hierdurch lässt sich eine vorteilhafte Linsenwirkung des optischen Elements bewirken.

Lichttechnisch vorteilhaft ist die Gestaltung derart, dass, in einer Projektion entlang der Achse betrachtet, der Mittelbereich den Lichteintrittsbereich vollständig überdeckt.

Erfindungsgemäß ist zwischen dem Lichteintrittsbereich und dem Lichtaustrittsbereich ein Reflexions-Oberflächenbereich gebildet, der zur Totalreflexion von Lichtstrahlen des Lichts ausgestaltet ist. Hierdurch lässt sich ein besonders guter Wirkungsgrad für die Anordnung erzielen.

Vorzugsweise ist der Lichteintrittsbereich durch eine Ausnehmung gebildet. Auf diese Weise lässt sich erzielen, dass ein besonders großer Anteil des von den LEDs abgestrahlten Lichts in das optische Element eintritt. Vorzugsweise weist dabei die Ausnehmung einen Bodenbereich und einen Seitenwandbereich auf; insbesondere kann sie vorteilhaft durch den Bodenbereich und den Seitenwandbereich gebildet sein.

Eine besonders geeignete Lichtlenkung lässt sich dabei erzielen, wenn der Reflexions-Oberflächenbereich zur Totalreflexion von Lichtstrahlen des Lichts ausgestaltet ist, die über den Seitenwandbereich in das optische Element eintreten. Weiterhin vorteilhaft ist das optische Element derart gestaltet, dass weitere Lichtstrahlen des Lichts, die über den Bodenbereich in das optische Element eintreten, über den Mittelbereich wieder aus dem optischen Element austreten.

Erfindungsgemäß ist das optische Element in Form eines Spritzgussteils gestaltet. Hierdurch lässt sich die Form des optischen Elements bei kostengünstiger Herstellungsmöglichkeit besonders geeignet gestalten.

Erfindungsgemäß weist der Lichtaustrittsbereich konvex geformte Strukturelemente auf, wobei auch auf dem Randbereich die Strukturelemente ausgebildet sind. Hierdurch lässt sich die Abstrahlcharakteristik herstellungstechnisch vorteilhaft besonders geeignet beeinflussen.

Vorzugsweise sind die Strukturelemente kugelabschnittförmig. Sie können insbesondere in Verbindung miteinander betrachtet eine Linienstruktur oder eine gekreuzte Linienstruktur aufweisen. So lassen sich die Strukturelemente besonders vorteilhaft herstellen, insbesondere, wenn das optische Element als Spritzgussteil gestaltet ist.

Gemäß einem weiteren Aspekt der Erfindung ist eine Anordnung zur Lichtabgabe vorgesehen, die ein erfindungsgemäßes optisches Element aufweist, sowie LEDs, wobei die Anzahl der LEDs *n* oder *n*+ *1* beträgt. Im Fall von *n* LEDs lassen sich diese besonders vorteilhaft so anordnen, dass jeweils genau eine der LEDs genau einem der *n* Drehsymmetrie-Bereiche zugeordnet ist. Im Fall von *n* + 1 LEDs lassen sich die diese besonders vorteilhaft so anordnen, dass jeweils genau eine der LEDs genau einem der n Drehsymmetrie-Bereiche zugeordnet ist und die dann verbleibende eine letzte LED mit Bezug auf den Lichteintrittsbereich mittig angeordnet ist.

Die Erfindung wird im Folgenden anhand von Ausführungsbeispielen und mit Bezug auf die Zeichnungen näher erläutert. Es zeigen:
- Fig. 1: eine Querschnitt-Skizze zum Prinzip einer erfindungsgemäßen Anordnung zur Lichtabgabe,
- Fig. 2: eine Ansicht auf einen Lichtaustrittsbereich eines erfindungsgemäßen optischen Elements,
- Fig. 3: eine Querschnitt-Skizze durch die Anordnung mit beispielhaften Lichtstrahlen,
- Fig. 4: eine perspektivische Skizze eines erfindungsgemäßen optischen Elements,
- Fig. 5: eine weitere perspektivische Skizze des optischen Elements aus einem anderen Blickwinkel,
- Fig. 6: vier beispielhafte Skizzen zu unterschiedlich gestalteten Anordnungen und damit erzielbaren Abstrahlcharakteristiken
- Fig. 7: einen vergrößerten Ausschnitt aus einem Oberflächenbereich eines Abformwerkzeugs zur Herstellung des optischen Elements in Form eines Spritzgussteils,
- Fig. 8: einen Ausschnitt des entsprechend hergestellten Mittelbereichs des optischen Elements und
- Fig. 9: ein Beispiel einer Linse mit Strukturelementen.

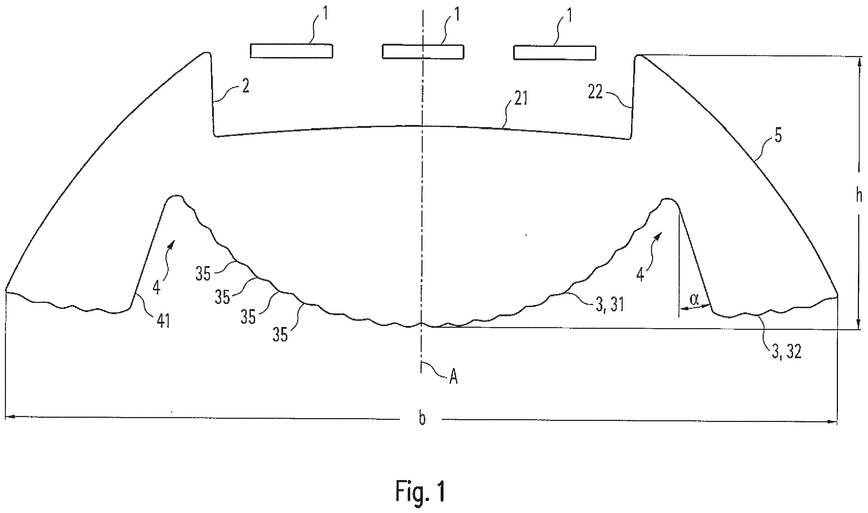

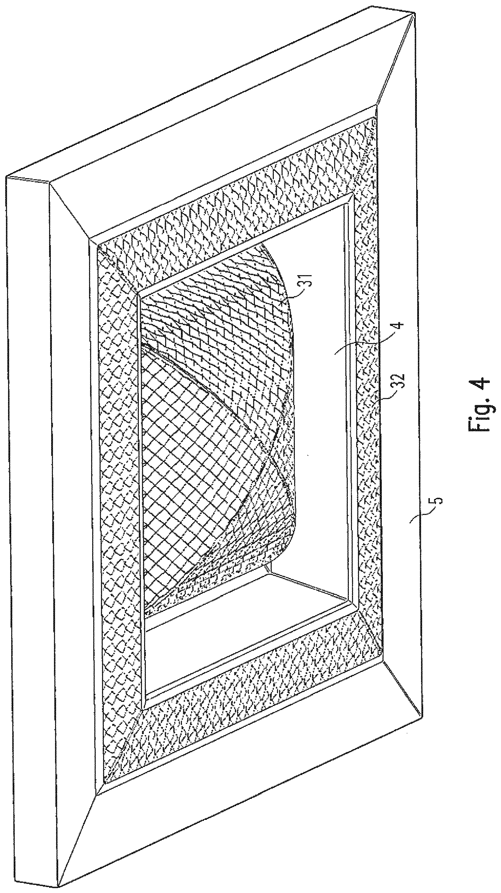

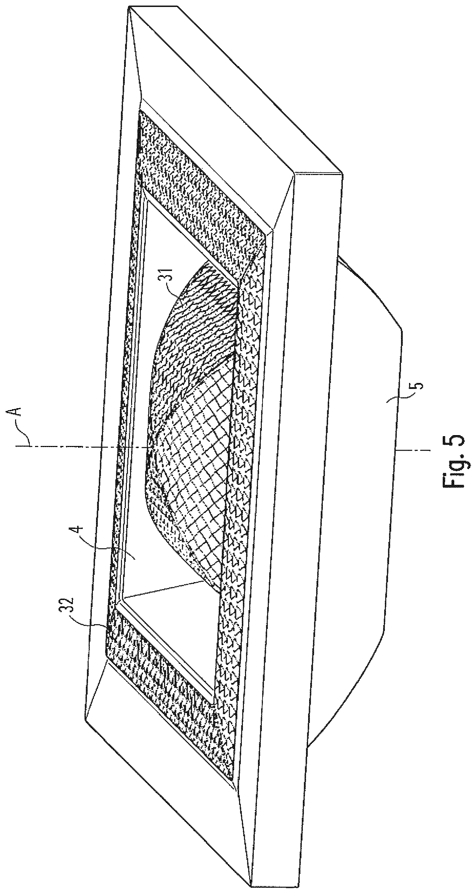

In den Figuren 4 und 5 sind perspektivische Skizzen eines erfindungsgemäßen optischen Elements gezeigt. Fig. 1 zeigt eine Querschnitt-Skizze zur Illustration des Wirkungsprinzips eines entsprechenden optischen Elements. Das optische Element ist zur Beeinflussung eines von mehreren LEDs 1 abgegebenen Lichts ausgestaltet. Eine erfindungsgemäße Anordnung zur Lichtabgabe umfasst ein entsprechendes optisches Element und die genannten LEDs 1. Die Anordnung ist insbesondere zur Erzielung einer gerichteten Lichtabgabe gestaltet.

Im Vergleich zu einem optischen Element für lediglich eine LED, lassen sich hierdurch Vorteile erzielen: Eine Leuchte, die mit entsprechenden optischen Elementen bzw. Anordnungen versehen ist, kann mit einer insgesamt reduzierten Anzahl von optischen Elementen bzw. Anordnungen gestaltet sein. Dies führt zu einer Reduktion des Montageaufwands.

Das optische Element weist einen Lichteintrittsbereich 2 zum Eintritt des Lichts auf und einen, dem Lichteintrittsbereich 2 gegenüber liegenden Lichtaustrittsbereich 3 zum Austritt des Lichts. Dabei ist das optische Element so gestaltet, dass durch seine Form eine Achse A festgelegt ist, die sowohl durch den Lichteintrittsbereich 2, als auch durch den Lichtaustrittsbereich 3 verläuft.

Wie beispielsweise aus Fig. 5 hervorgeht, ist der Lichtaustrittsbereich 3 durch eine ringförmig umlaufend gestaltete Einbuchtung 4 in einen zentralen Mittelbereich 31 und einen, um den Mittelbereich 31 herum angeordneten Randbereich 32 untergliedert. Beim hier gezeigten Beispiel verläuft dabei die Achse A durch den Mittelbereich 31. Die Einbuchtung 4 erstreckt sich dementsprechend in geschlossen umlaufender Form um die Achse A herum. Auch der Randbereich 32 erstreckt sich vorzugsweise in geschlossen umlaufender Form um die Achse A herum.

Der Lichteintrittsbereich 2 und der Lichtaustrittsbereich 3 sind derart geformt, dass sie, in einer Richtung entlang der Achse A betrachtet, eine *n*-zählige Drehsymmetrie aufweisen, wobei n eine natürliche Zahl größer als 2 ist. Vorzugsweise ist die Gestaltung dabei derart, dass - wie in den Figuren skizziert - die Achse A hierbei mit der Achse der genannten Drehsymmetrie identisch ist.

Wenn man also in einer Richtung parallel zur Achse A auf den Lichtaustrittsbereich 3 blickt, so sieht dieser nach einer Drehung um den Winkel 360°/*n* um die Achse A wieder genauso aus wie vor der Drehung. Dasselbe gilt für den Lichteintrittsbereich 2.

Wenn man mit anderen Worten den Lichtaustrittsbereich 3 auf eine Fläche normal zu der Achse *A* projiziert, so weist diese Projektion *n* Drehsymmetrie-Bereiche auf. Die Bezeichnung "Drehsymmetrie" wird im Allgemeinen für ebene Figuren verwendet. Hier soll mit dem Ausdruck "Drehsymmetrie-Bereich" jedoch der entsprechende dreidimensionale Raumbereich bezeichnet sein, der durch die genannte Projektion entlang der Achse *A* festgelegt bzw. gebildet ist. Es sind hier somit *n* dreidimensionale Drehsymmetrie-Bereiche gebildet, die sich alle bis zu der Achse A hin erstrecken.

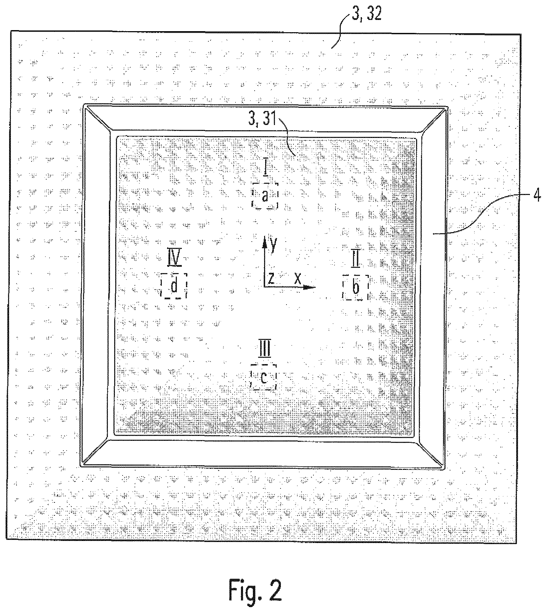

Im hier gezeigten Beispiel weisen der Lichteintrittsbereich 2 und der Lichtaustrittsbereich 3 eine vier-zählige Drehsymmetrie auf. Dies geht beispielsweise deutlich aus der Skizze der Fig. 2 hervor, die eine Ansicht entlang der Achse A auf den Lichtaustrittsbereich 3 zeigt. Im gezeigten Beispiel sind also vier Drehsymmetrie-Bereiche *I, II, III, IV* gebildet, die dementsprechend mit Bezug auf die Achse *A* jeweils einen Öffnungswinkel von 90° aufweisen.

Vorzugsweise weist das gesamte optische Element die genannte Drehsymmetrie auf.

Durch die Drehsymmetrie lässt sich erzielen, dass die LEDs 1 den einzelnen Drehsymmetrie-Bereichen *I, II, III, IV* besonders geeignet zugeordnet werden können; als Folge hiervon lässt sich eine besonders gut kontrollierbare Lichtlenkung erzielen. Insbesondere lässt sich erzielen, dass das Licht der LEDs 1 jeweils überwiegend durch denjenigen Bereich des optischen Elements beeinflusst wird, der in dem jeweils zugeordneten Drehsymmetrie-Bereich *I, II, III, IV* liegt.

Dabei ist die Anordnung der LEDs 1 gegenüber dem optischen Element vorzugsweise derart, dass in jedem der Drehsymmetrie-Bereiche *I, II, III, IV* eine LED 1 angeordnet ist, wie in Fig. 2 durch die gestrichelt angedeuteten Plätze *a, b, c, d* für vier LEDs 1 beispielhaft skizziert. Die Anordnung umfasst allgemein formuliert vorzugsweise entweder *n* LEDs 1 oder *n*+*1* LEDs 1, im gezeigten Beispiel also vier oder fünf LEDs 1. Die fünfte LEDs 1 ist dabei vorzugsweise mit Bezug auf den Lichteintrittsbereich 2 mittig angeordnet, insbesondere so, dass sie die Achse A durchsetzt.

Allgemeiner formuliert ist vorzugsweise im Fall einer *n*-zähligen Drehsymmetrie und *n* LEDs die Anordnung der LEDs 1 so, dass in jedem der *n* Drehsymmetrie-Bereiche genau eine der LEDs 1 angeordnet ist. Im Fall von *n*+*1* LEDs 1 ist die Anordnung der LEDs 1 so, dass in jedem der n Drehsymmetrie-Bereiche genau eine der LEDs 1 angeordnet ist und die eine verbleibende LED mit Bezug auf den Lichteintrittsbereich 2 mittig bzw. die Achse A durchsetzend angeordnet ist.

Durch die genannte Anordnung der LEDs 1 relativ zu dem optischen Element lässt sich erzielen, dass das von einer der LEDs 1 abgegebene Licht das optische Element überwiegend innerhalb desjenigen Drehsymmetrie-Bereichs durchsetzt, in dem die betreffende LED angeordnet ist. Hierdurch lässt sich die besonders gute Kontrollierbarkeit besonders geeignet erzielen.

Außerdem lässt sich durch die genannte Gestaltung erzielen, dass eine kleine Abweichung bei der Platzierung der LEDs 1 einen kaum merklichen Einfluss auf das Lichtabstrahlverhalten der Anordnung hat. Auch die Verwendung einer LED, die in ihrer Größe geringfügig von ihrem vorgesehenen Wert abweicht, hat sehr wenig Einfluss hierauf. Daher erlaubt die erfindungsgemäße Anordnung zur Erzielung einer bestimmten Abstrahlcharakteristik innerhalb einer gewissen Genauigkeit vergleichsweise große Freiräume bzw. Fertigungs-Toleranzen, so dass die Herstellung der Anordnung insgesamt besonders kostengünstig möglich ist.

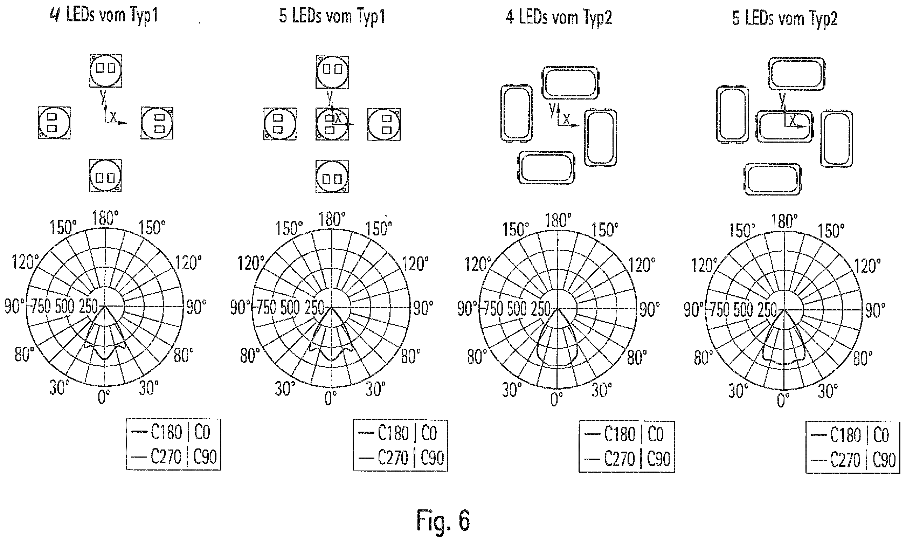

In Fig. 6 ist eine Tabelle gezeigt, die vier Beispiele von unterschiedlich gestalteten Anordnungen mit den jeweiligen Abstrahlcharakteristiken illustriert; alle Anordnungen weisen dabei eine vier-zählige Drehsymmetrie auf.

In der ersten Spalte von links ist in der zweiten Zeile die Anordnung von vier LEDs eines Typs 1 skizziert, entsprechend den in Fig. 2 skizzierten Plätze *a, b, c, d.* In der dritten Zeile ist die dazugehörige Lichtverteilungskurve gezeigt. In der zweiten Spalte ist eine entsprechende Darstellung gezeigt, die sich auf eine Anordnung bezieht, bei der, im Unterschied zur ersten Spalte, eine fünfte LED in der Mitte, also die Achse A durchsetzend angeordnet ist. Die Lichtverteilungskurve ähnelt sehr derjenigen aus der ersten Spalte. Das Hinzufügen einer fünften LED hat also einen vergleichsweise geringen Einfluss auf die Lichtabstrahlcharakteristik.

Die Darstellung in der dritten Spalte bezieht sich auf eine Anordnung, bei der wieder vier LEDs verwendet sind, jedoch von einem Typ 2, die größere Lichtabgabeflächen aufweisen, als die in den ersten beiden Spalten gezeigten LEDs vom Typ 1. Die betreffende Lichtverteilungskurve ist hier ebenmäßiger. Die vierte Spalte bezieht sich entsprechend wieder auf eine Anordnung mit fünf LEDs; wiederum ist das Hinzufügen der fünften LED ohne signifikanten Einfluss auf das Lichtabstrahlverhalten.

Die Anzahl der LEDs kann also in gewissen Grenzen variiert werden, ohne dass dies eine deutliche Änderung der Abstrahlcharakteristik zur Folge hätte.

Besonders geeignet ist eine Drehsymmetrie, bei der der Wert n zwischen 3 und 10 liegt, insbesondere zwischen 3 und 6. Hierdurch ist eine besonders gleichmäßige Anordnung der LEDs 1 gegenüber dem Lichteintrittsbereich 2 ermöglicht. Im Fall einer drei- oder vier- oder sechs-zähligen Drehsymmetrie ist zudem ein besonders einfaches Stapeln mehrerer entsprechender optischer Elemente ermöglicht.

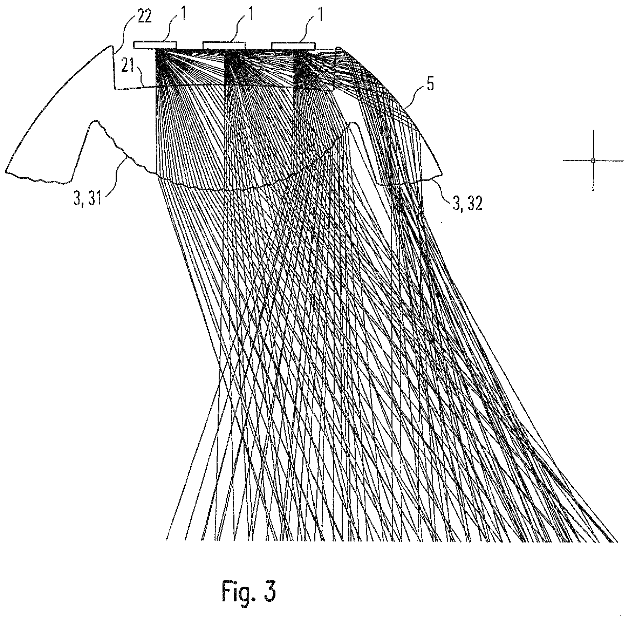

Wie in Fig. 1 beispielhaft gezeigt, ist das optische Element vorzugsweise so gestaltet, dass der Mittelbereich 31, in einem rechten Winkel zur Achse A betrachtet, in erster Näherung kreisabschnittförmig ist. Insbesondere ist dabei die Formgebung derart, dass, in einer Projektion entlang der Achse A betrachtet, der Mittelbereich 31 den Lichteintrittsbereich 2 vollständig überdeckt. Hierdurch lässt sich für einen Großteil des von den LEDs 1 abgegebenen Lichts eine besonders geeignete Bündelung bewirken. Dies ist in Fig. 3 illustriert, in der beispielhaft einige exemplarische Lichtstrahlen des von den LEDs 1 abgegebenen Lichts gezeigt sind.

Weiterhin vorzugsweise ist, wie beispielsweise in den Figuren 1 und 5 bezeichnet, zwischen dem Lichteintrittsbereich 2 und dem Lichtaustrittsbereich 3 ein Reflexions-Oberflächenbereich 5 gebildet, der zur Totalreflexion von Lichtstrahlen des Lichts ausgestaltet ist. Hierdurch lässt sich eine insgesamt breite Lichtabgabe erzielen. Vorzugsweise erstreckt sich der Reflexions-Oberflächenbereich 5 bis an den Lichteintrittsbereich 2.

Der Lichteintrittsbereich 2 ist vorzugsweise durch eine Ausnehmung gebildet. Dabei weist die Ausnehmung vorzugsweise einen Bodenbereich 21 und einen Seitenwandbereich 22 auf. Insbesondere kann die Ausnehmung, wie in den Figuren skizziert, durch den Bodenbereich 21 und den Seitenwandbereich 22 gebildet sein. Vorzugsweise sind die LEDs 1, zumindest mit ihren Licht abgebenden Oberflächenbereichen innerhalb der Ausnehmung angeordnet. Hierdurch lässt sich ein besonders hoher lichttechnischer Wirkungsgrad der Anordnung erzielen.

Wie insbesondere aus Fig. 3 hervorgeht, ist die Gestaltung dabei bevorzugt derart, dass der Reflexions-Oberflächenbereich 5 zur Totalreflexion von Lichtstrahlen des Lichts ausgestaltet ist, die über den Seitenwandbereich 22 in das optische Element eintreten und weiterhin vorzugsweise weitere Lichtstrahlen des Lichts, die über den Bodenbereich 21 in das optische Element eintreten, über den Mittelbereich 31 wieder aus dem optischen Element austreten.

Dabei ist vorzugsweise die Gestaltung derart, dass derjenige Anteil des von den LEDs 1 abgegebenen Lichts, der über den Seitenwandbereich 22 in das optische Element eintritt zumindest überwiegend an dem Reflexions-Oberflächenbereich 5 totalreflektiert wird und derjenige weitere Anteil des von den LEDs 1 abgegebenen Lichts, der über den Bodenbereich 21 in das optische Element eintritt, zumindest überwiegend über den Mittelbereich 31 wieder aus dem optischen Element austritt.

Insbesondere kann, etwas anders formuliert, vorgesehen sein, dass die Formgebung des optischen Elements so ausgelegt ist, dass das von den LEDs 1 abgegebene Licht in zwei Hauptwege aufgeteilt wird, wobei der erste Hauptweg durch den Bodenbereich 21 in das optische Element hineinführt und über den Mittelbereich 31 wieder aus dem optischen Element heraus. Der zweite Hauptweg betrifft das von den LEDs 1 flacher abgegebene Licht und führt über den Seitenwandbereich 22 in das optische Element hinein und über den Randbereich 32 wieder aus Letzterem heraus. Derjenige Teil des Lichts, der dem ersten Hauptweg folgt, wird durch Brechung gelenkt und derjenige weitere Teil, der dem zweiten Hauptweg folgt, erfährt eine Totalreflexion und wird auf diese Weise in seiner Richtung beeinflusst.

Wie aus Fig. 1 deutlich wird, ist durch die beschriebene Formgebung quasi eine "Mittellinse" gebildet, die auf der Seite des Lichtaustritts durch den Mittelbereich 31 begrenzt ist und die gegenüber dem Randbereich 32 "zurückversetzt" ist, also in Richtung auf den Lichteintrittsbereich 2 zu versetzt gebildet ist. Auf diese Weise lässt sich erzielen, dass das optische Element insgesamt mit vergleichsweise besonders geringem Bauvolumen gestaltet werden kann und mit einer geringen Erstreckung h entlang der Achse *A,* also einer geringen "Bauhöhe" *h.* Dies ist vorteilhaft mit Bezug auf die Herstellungsmöglichkeiten. Insbesondere lässt sich auf diese Weise eine besonders kurze Herstellungszeit erzielen und eine besonders kostengünstige Herstellung.

Vorzugsweise ist die Gestaltung des optischen Elements derart, dass für seine Erstreckung *b* quer zur Achse *A* in Relation zur Bauhöhe *h* Folgendes erfüllt ist: *0,20 < h*/*b < 0,50,* vorzugsweise *0,25 < h*/*b < 0,40.*

Zudem kann durch die Wahl der "Höhenpositionierung" der Mittellinse die anteilsmäßige Aufspaltung des Lichts in die beiden Hauptwege gesteuert werden und entsprechend den Anforderungen mehr oder weniger Licht auf den Reflexions-Oberflächenbereich 5 gelenkt werden. Hierdurch lassen sich die Eigenschaften der Anordnung besonders geeignet signifikant beeinflussen.

Vorzugsweise ist das optische Element als Spritzgussteil gestaltet. Hierdurch ist eine besonders vorteilhafte Herstellung des optischen Elements ermöglicht.

Wie beispielsweise in Fig. 1 angedeutet, weist der Lichtaustrittsbereich 3 konvex geformte Strukturelemente 35 auf. Hierdurch lässt sich die Lichtabgabe der Anordnung weiterhin geeignet beeinflussen. Die Strukturelemente 35 können beispielsweise kugelabschnittförmig sein; besonders bevorzugt allerdings weisen sie längliche Strukturen bzw. Formen, also quasi "Linien", insbesondere parallele Linien auf, beispielsweise nach Art von Zylinderlinsen. Dabei können sich diese Strukturelemente 35 bzw. Zylinderlinsen insbesondere auch auf gekrümmten Oberflächenbereichen des optischen Elements erstrecken. Die Strukturelemente 35 können auch so ausgebildet sein, dass sie gekreuzte Linien zeigen, also beispielsweise "gekreuzt verlaufende Zylinderlinsen", so dass eine Art Mikroprismenoptik gebildet ist.

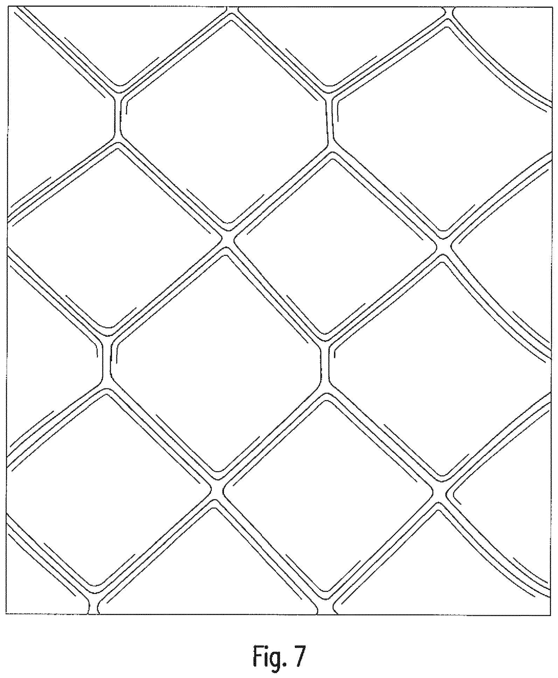

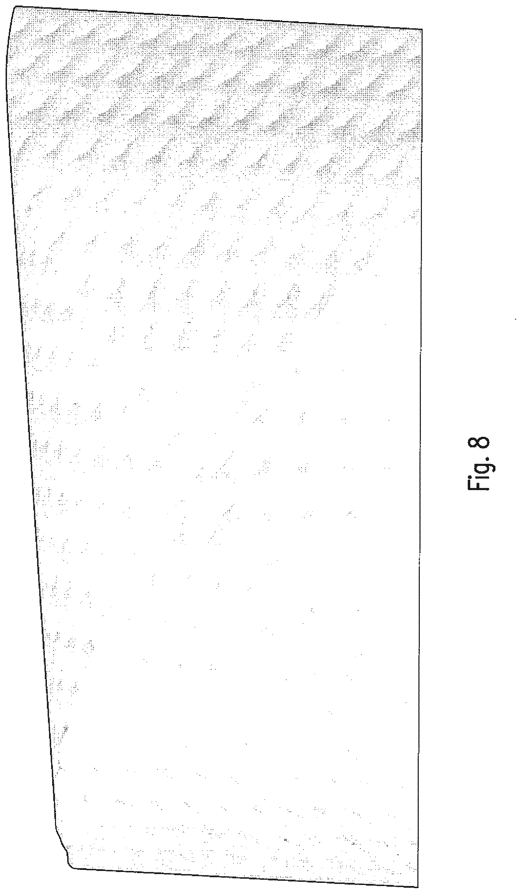

Eine besonders geeignete Herstellungsmöglichkeit der Strukturelemente 35 besteht darin, das optische Element als Spritzgussteil zu gestalten und dabei den, den Strukturelementen 35 entsprechenden Formbereich des betreffenden Abformwerkzeugs mit einem rotierenden Werkzeug zu bearbeiten, um auf diese Weise die, zu den Strukturelementen 35 korrespondierenden negativen Oberflächenbereiche zu formen. Als rotierendes Werkzeug eignet sich hierbei beispielsweise ein Kugelfräser. Auf diese Art lassen sich die Strukturelemente 35 besonders geeignet insbesondere auch auf insgesamt gekrümmten Oberflächenbereichen des optischen Elements vorteilhaft ausbilden, also beispielsweise auf der gekrümmten Oberfläche des Mittelbreichs 31. In Fig. 7 ist beispielhaft ein solcher Oberflächenbereich eines Abformwerkzeugs vergrößert dargestellt. Fig. 8 zeigt vergrößert einen entsprechend gestalteten Oberflächenbereich des Mittelbereichs 31.

Durch die Strukturelemente 35 lässt sich eine nochmals verbesserte Beeinflussbarkeit der Lichtlenkung erzielen. Insbesondere lassen sich durch die Strukturelemente 35 Verluste in Folge von Rückstreuung vermeiden bzw. reduzieren. Weiterhin lassen sich durch die Strukturelemente 35 besonders geeignet hohe punktuelle Leuchtdichten quasi auflösen bzw. reduzieren. Zudem lässt sich erzielen, dass Licht der LEDs aus unterschiedlichen Abstrahlwinkeln besser gemischt wird. Hierdurch lässt sich insbesondere der negative Effekt einer Phosphor-Korona deutlich reduzieren. Insgesamt wird eine verbesserte Farbdurchmischung des Lichts bewirkt.

Eine unerwünschte Totalreflexion an den Strukturelementen 35 lässt sich vermeiden, indem die Strukturen so gestaltet werden, dass sie eine gewisse Größe nicht überschreiten bzw. so, dass die Steilheit der Strukturoberflächen nicht zu groß gewählt wird. Auf diese Weise lässt sich insbesondere ein unerwünschter, störender Streulichtanteil vermeiden.

Die Strukturelemente 35 müssen dabei nicht alle mit demselben Radius gestaltet sein. Es können unterschiedliche Radien vorgesehen sein und auch unterschiedliche Tiefen. Auf diese Weise lässt sich die Richtungsabhängigkeit der Lichtabgabe sehr gezielt und fein beeinflussen. Es können auch asymmetrische oder beliebig gestaltete geometrische Formen verwendet werden. Allerdings ist hierbei der Aufwand zur Herstellung des Abformwerkzeugs in der Regel deutlich erhöht. Es können auch Strukturen verwendet werden, die durch ein aufwändigeres Verfahren und Bearbeiten des Abformwerkzeugs eingebracht werden können, zum Beispiel gekreuzte konkavkonvexe Strukturen.

Im hier gezeigten Beispiel sind die Strukturelemente 35 auf der gesamten Oberfläche des Mittelbereichs 31 ausgebildet. Zudem sind die Strukturelemente 35 auf dem Randbereich 32 ausgebildet. Die Einbuchtung 4 ist - mit Bezug auf die Achse A - innen durch einen Randbereich des Mittelbereichs 31 gebildet und außen durch einen Schrägflächenbereich 41, der sich nach außen bis zu dem Randbereich 32 hin erstreckt; dieser Schrägflächenbereich 41 weist keine Strukturelemente 35 auf, da hier kein signifikanter Lichtdurchsatz vorgesehen ist, wie aus der Darstellung der Fig. 3 hervorgeht. Der Schrägflächenbereich 41 ist vorzugsweise so geformt, dass er mit der Achse A Winkel *α* einschließt, die kleiner als 40° sind, besonders bevorzugt kleiner als 30°.

Die Strukturelemente 35 können ergänzend auch auf dem Lichteintrittsbereich 2 ausgebildet sein.

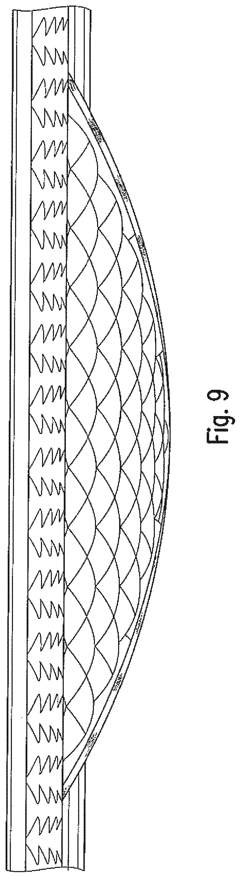

Allgemeiner formuliert lassen sich die Strukturelemente 35 vorteilhaft nicht nur bei dem hier beschriebenen optischen Element anwenden, sondern allgemein bei Linsen, und zwar sowohl im Lichteintritts- als auch im Lichtaustrittsbereich. Fig. 9 zeigt schematisch einen Querschnitt durch eine entsprechende Linse.

## Patentansprüche

1. Optisches Element zur Beeinflussung eines von mehreren LEDs (1) abgegebenen Lichts, aufweisend
- einen Lichteintrittsbereich (2) zum Eintritt des Lichts,
- einen, dem Lichteintrittsbereich (2) gegenüber liegenden Lichtaustrittsbereich (3) zum Austritt des Lichts,
wobei durch die Form des optischen Elements eine, sowohl durch den Lichteintrittsbereich (2), als auch durch den Lichtaustrittsbereich (3) verlaufende Achse (A) festgelegt ist, wobei der Lichtaustrittsbereich (3) konvex geformte Strukturelemente (35) aufweist,
wobei der Lichtaustrittsbereich (3) durch eine ringförmige Einbuchtung (4) in einen zentralen Mittelbereich (31) und einen, um den Mittelbereich (31) herum angeordneten Randbereich (32) untergliedert ist,
wobei der Lichtaustrittsbereich (3) derart geformt ist, dass er, in einer Richtung entlang der Achse (A) betrachtet, eine *n*-zählige Drehsymmetrie aufweist, wobei *n* eine natürliche Zahl größer als 2 ist,
wobei der Lichteintrittsbereich (2) derart geformt ist, dass er, in der Richtung entlang der Achse (*A*) betrachtet, die *n*-zählige Drehsymmetrie aufweist,
wobei zwischen dem Lichteintrittsbereich (2) und dem Lichtaustrittsbereich (3) ein Reflexions-Oberflächenbereich (5) gebildet ist, der zur Totalreflexion von Lichtstrahlen des Lichts ausgestaltet ist,
wobei das optische Element in Form eines Spritzgussteils gestaltet ist
**dadurch gekennzeichnet,**
**dass** der Randbereich (32) die Strukturelemente (35) aufweist, und
**dass** die Einbuchtung (4) mit Bezug auf die Achse (A) durch einen Randbereich des Mittelbereichs (31) und durch einen Schrägflächenbereich (41) gebildet ist, wobei der Schrägflächenbereich (41) sich nach außen hin bis zum Randbereich (32) erstreckt, und wobei der Schrägflächenbereich (41) keine Strukturelemente (35) aufweist.

2. Optisches Element nach Anspruch 1,
bei dem n einen Wert zwischen 3 und 10 aufweist, insbesondere zwischen 3 und 6.

3. Optisches Element nach Anspruch 1 oder 2,
bei dem der Mittelbereich (31), in einem rechten Winkel zur Achse (A) betrachtet, in erster Näherung kreisabschnittförmig ist.

4. Optisches Element nach einem der vorhergehenden Ansprüche,
bei dem, in einer Projektion entlang der Achse (A) betrachtet, der Mittelbereich (31) den Lichteintrittsbereich (2) vollständig überdeckt.

5. Optisches Element nach einem der vorhergehenden Ansprüche,
bei dem der Lichteintrittsbereich (2) durch eine Ausnehmung gebildet ist.

6. Optisches Element nach Anspruch 5,
bei dem die Ausnehmung einen Bodenbereich (21) und einen Seitenwandbereich (22) aufweist, insbesondere durch den Bodenbereich (21) und den Seitenwandbereich (22) gebildet ist.

7. Optisches Element nach Anspruch 6,
bei dem der Reflexions-Oberflächenbereich (5) zur Totalreflexion von Lichtstrahlen des Lichts ausgestaltet ist, die über den Seitenwandbereich (22) in das optische Element eintreten.

8. Optisches Element nach Anspruch 6 oder 7,
das derart gestaltet ist, dass weitere Lichtstrahlen des Lichts, die über den Bodenbereich (21) in das optische Element eintreten, über den Mittelbereich (31) wieder aus dem optischen Element austreten.

9. Optisches Element nach einem der vorhergehenden Ansprüche,
bei dem die Strukturelemente (35) kugelabschnittförmig sind oder in Verbindung miteinander betrachtet eine Linienstruktur oder eine gekreuzte Linienstruktur aufweisen.

10. Anordnung zur Lichtabgabe, aufweisend
- ein optisches Element nach einem der vorhergehenden Ansprüche
- LEDs (1), wobei die Anzahl der LEDs (1) *n* oder *n*+ *1* beträgt.

## Claims

1. Optical element for influencing a light emitted by a plurality of LEDs (1), comprising
- a light entry region (2) for the entry of the light,
- a light exit region (3), opposite the light entry region (2), for the exit of the light,
wherein the shape of the optical element defines an axis (A) running through both the light entry region (2) and the light exit region (3), wherein the light exit region (3) comprises convexly shaped structural elements (35),
wherein the light exit region (3) is subdivided by an annular indentation (4) into a central middle region (31) and an edge region (32) arranged around the middle region (31),
wherein the light exit region (3) is shaped to have an n-fold rotational symmetry when viewed in a direction along the axis (A), where n is a natural number greater than 2,
wherein the light entry region (2) is shaped to have the n-fold rotational symmetry when viewed in the direction along the axis (A), wherein a reflection surface region (5), which is configured for the total reflection of light beams of the light, is formed between the light entry region (2) and the light exit region (3),
wherein the optical element is designed in the form of an injection-molded part,
**characterized in that**
the edge region (32) comprises the structural elements (35), and
the indentation (4) is formed with respect to the axis (A) by an edge region of the middle region (31) and by an inclined surface region (41), wherein the inclined surface region (41) extends outward to the edge region (32), and wherein the inclined surface region (41) has no structural elements (35).

2. Optical element according to Claim 1,
in which n has a value between 3 and 10, in particular between 3 and 6.

3. Optical element according to Claim 1 or 2,
in which the middle region (31) in a first approximation has the shape of a circular segment when viewed at a right angle to the axis (A).

4. Optical element according to any one of the preceding claims, in which, when viewed in a projection along the axis (A), the middle region (31) completely covers the light entry region (2) .

5. Optical element according to any one of the preceding claims, in which the light entry region (2) is formed by a recess.

6. Optical element according to Claim 5,
in which the recess comprises a bottom region (21) and a side wall region (22), is in particular formed by the bottom region (21) and the side wall region (22).

7. Optical element according to Claim 6,
in which the reflection surface region (5) is configured for the total reflection of light beams of the light entering the optical element via the side wall region (22).

8. Optical element according to Claim 6 or 7,
configured in such a way that further light beams of the light entering the optical element via the bottom region (21) exit the optical element via the middle region (31).

9. Optical element according to any one of the preceding claims, in which the structural elements (35) have the shape of a spherical segment or, when viewed in connection to one another, a line structure or a crossed line structure.

10. Arrangement for emitting light, comprising
- an optical system according to any one of the preceding claims,
- LEDs (1), wherein the number of LEDs (1) is *n* or *n+1.*

## Revendications

1. Élément optique destiné à influer sur une lumière émise par plusieurs LED (1), présentant
- une zone d'entrée de lumière (2) destinée à l'entrée de la lumière,
- une zone de sortie de lumière (3) opposée à la zone d'entrée de lumière (2) et destinée à la sortie de la lumière,
dans lequel la forme de l'élément optique permet de fixer un axe (A) qui traverse la zone d'entrée de lumière (2) ainsi que la zone de sortie de lumière (3), ladite zone de sortie de lumière (3) présentant des éléments de texturation (35) de forme convexe,
dans lequel la zone de sortie de lumière (3) est divisée par une échancrure (4) circulaire en une zone centrale (31) et une zone périphérique (32) disposée autour de la zone centrale (31),
dans lequel la zone de sortie de lumière (3) a une forme telle qu'elle présente une symétrie en rotation d'ordre n, vue selon l'axe (A), n étant un entier naturel supérieur à 2,
dans lequel la zone d'entrée de lumière (2) a une forme telle qu'elle présente ladite symétrie en rotation d'ordre n, vue selon l'axe (A), une zone de surface réfléchissante (5) étant constituée entre la zone d'entrée de lumière (2) et la zone de sortie de lumière (3) pour effectuer une réflexion totale des rayons de lumière,
dans lequel l'élément optique est conçu sous la forme d'une pièce moulée ;
**caractérisé en ce que**
la zone périphérique (32) présente les éléments de texturation (35), et
l'échancrure (4) est constituée, eu égard à l'axe (A), par une zone périphérique de la zone centrale (31) et par une zone de pan incliné (41), ladite zone de pan incliné (41) s'étendant vers l'extérieur jusqu'à la zone périphérique (32) et ne présentant aucun élément de texturation (35).

2. Élément optique selon la revendication 1,
dans lequel n présente une valeur comprise entre 3 et 10, notamment entre 3 et 6.

3. Élément optique selon la revendication 1 ou 2,
dans lequel la zone centrale (31), vue perpendiculairement à l'axe (A), a, en première approximation, la forme d'un segment de cercle.

4. Élément optique selon l'une des revendications précédentes, dans lequel la zone centrale (31), vue en projection selon l'axe (A), recouvre entièrement la zone d'entrée de lumière (2) .

5. Élément optique selon l'une des revendications précédentes, dans lequel la zone d'entrée de lumière (2) est constituée par un évidement.

6. Élément optique selon la revendication 5,
dans lequel l'évidement présente une zone de fond (21) et une zone de paroi latérale (22) et est notamment constitué par lesdites zone de fond (21) et zone de paroi latérale (22).

7. Élément optique selon la revendication 6,
dans lequel la zone de surface réfléchissante (5) est conçue pour une réflexion totale des rayons de lumière pénétrant dans l'élément optique par la zone de paroi latérale (22).

8. Élément optique selon la revendication 6 ou 7,
conçu de telle manière que d'autres rayons de lumière, pénétrant dans l'élément optique par la zone de fond (21), ressortent de l'élément optique par la zone centrale (31).

9. Élément optique selon l'une des revendications précédentes, dans lequel les éléments de texturation (35) ont la forme d'un segment sphérique ou, considérés dans leur ensemble, présentent une structure en lignes ou une structure en lignes croisées.

10. Ensemble émetteur de lumière, présentant
- un élément optique selon l'une des revendications précédentes,
- des LED (1), le nombre desdites LED (1) étant *n* ou *n+1.*
